# EUROPÄISCHE PATENTSCHRIFT

(11) **EP 0 428 896 B1**
(45) Veröffentlichungstag und Bekanntmachung des Hinweises auf die Patenterteilung: **20.01.1993**
(21) Anmeldenummer: 90120398.4
(22) Anmeldetag: 24.10.1990
(51) Int. Cl.: F16L 3/01, F16L 3/22

(54) **Befestigungssystem**
Fastening system
Système de fixation

(30) Priorität: 24.11.1989 DE 3938923
(43) Veröffentlichungstag der Anmeldung: 29.05.1991
(73) Patentinhaber: HYDAC TECHNOLOGY GMBH, 66273 Sulzbach (DE)
(72) Erfinder: Kasubke, Volker, W-6680 Neunkirchen (DE)
(74) Vertreter: Patentanwälte Bartels und Partner

(56) Entgegenhaltungen:
- CH-A- 588 660
- CH-A- 636 173
- CH-A- 664 429
- DE-A- 2 345 843
- DE-A- 3 037 938
- DE-C- 901 555
- DE-U- 8 710 320
- GB-A- 1 580 213

## Beschreibung

Die Erfindung betrifft ein Befestigungssystem für die Befestigung von Energieleitungen mit mindestens einer Grundplatte, die aus einem Band gebildet ist, das biegsam ist und das ein Lochmuster mit durchgehenden Löchern aufweist, die zumindest teilweise parallel zueinander verlaufende, einen vorgebbaren Abstand voneinander einnehmende Lochreihen ausbilden, sowie mit auf dieser Grundplatte aufsetzbaren Elementen mit jeweils einem Kopfteil für die Aufnahme mindestens einer Energieleitung und mit einer ersten Art von Fußteil, die für einen festsitzenden Eingriff in die Löcher vorgesehen ist, wobei das Band aus 0,5 bis 5 mm dickem Kunststoffmaterial ist oder statt Kunststoff aus Stahl besteht mit einer Dicke von 0,1 bis 0,5 mm.

Ein gattungsgleiches Befestigungssystem ist durch die DE-U-8 710 320 bekannt. Dieses bekannte Befestigungssystem dient dazu, Energieleitungen in Form von Fußbodenheizungsrohren auf Wärmedämmplatten zu verlegen. Die Grundplatte läßt sich mit den aufsetzbaren Elementen versehen, aus Platzersparnisgründen schlangenförmig oder zu einer Rolle aufwickeln. Sofern die bekannte Grundplatte aus einem flexiblen Weichschaumstoff besteht, bilden sich in unmittelbarer Nähe der eingesetzten, aufsetzbaren Elemente Knickstellen innerhalb der Grundplatte aus, und zwar an Stellen, die keine durchgehenden Löcher aufweisen. Ist das bekannte Befestigungssystem für Fußbodenheizungsrohre erst einmal mit den Wärmedämmplatten mittels den aufsetzbaren Elementen verbunden, ist das Befestigungssystem keinerlei Biegebeanspruchungen mehr ausgesetzt. Würde man die Grundplatte, die neben einem flexiblen Weichschaumstoff auch aus anderen Materialien, wie Kunststoffolie, Metallblech oder Textilfasergewebe, bestehen kann, häufig wechselnden und hohen Biegebeanspruchungen aussetzen, käme es zu einem Materialversagen.

Bei einem gattungsfremden Befestigungssystem gemäß der DE-A-3 037 938 handelt es sich um ein vorgefertigtes Einbauelement für Flüssigkeits-Flächenheizungen, das zweischichtig aufgebaut ist und aus einer flexiblen Folienbahn besteht, auf der streifenförmige, quer zur Längserstreckung der Folienbahn liegende Schaumstoffstreifen parallel zueinander befestigt sind, deren Breite und Abstand untereinander so bemessen ist, daß das Einbauelement zu einem Ballen einrollbar ist. Dieses bekannte Einbauelement ist relativ leicht und läßt sich raumsparend transportieren, sofern es zu einem Ballen zusammengerollt ist. Ebenso wie das bereits beschriebene gattungsgemäße Befestigungselement ist das etwa 20 bis 35 mm dicke Einbauelement nach seinem Einbau keinerlei Biegebeanspruchungen mehr ausgesetzt. Sollten beispielsweise durch sachfremde Verwendung dahingehende Biegebeanspruchungen auftreten, würde das Einbauelement zerstört.

Aufsetzbare Elemente, die auch für das erfindungsgemäße Befestigungssystem Verwendung finden können, sind in der DE-A-23 45 843 offenbart. Diese Druckschrift zeigt auch eine Grundplatte in Form eines sogenannten Trägers, der eine langgestreckte Hülse für die Aufnahme des Fußteiles eines aufsetzbaren Elementes aufweist. Dieser bekannte Träger ist für die Aufnahme von Biegebeanspruchungen weder vorgesehen noch geeignet, denn es besteht die Gefahr der Abscherung sowohl bei der Hülse als auch bei dem Fußteil des aufsetzbaren Elementes.

Ausgehend von diesem Stand der Technik liegt der Erfindung die Aufgabe zugrunde, ein Befestigungssystem für die Befestigung von Energieleitungen zu schaffen, das vielseitig einsetzbar ist und das ohne die Gefahr zerstört zu werden, häufig wechselnden und hohen Biegebeanspruchungen ausgesetzt werden kann. Diese Aufgabe löst ein Befestigungssystem mit den Merkmalen des Anspruches 1.

Das erfindungsgemäße Befestigungssystem weist eine Grundplatte auf, deren Materialquerschnitt quer zur Richtung der einwirkenden Biegebeanspruchung durch Lochreihen, in die die aufsetzbaren Elemente zum Führen von Energieleitungen einsetzbar sind, derart geschwächt ist, daß dort Knickstellen auftreten. Das flexible Band bildet mithin unter Einwirkung der Biegebeanspruchung eine Art Vieleck aus, wobei die durch die Knickstellen gebildete Anzahl der Ecken mittels der vorgebbaren Anzahl an Lochreihen definierbar ist.

Es ist überraschend, daß trotz Schwächung des Materialquerschnitts durch die Lochreihen, die zu Knickstellen im Band führen und trotz hoher einwirkender Biegebeanspruchungen, ein Band geschaffen ist, das eine höhere Lebensdauer aufweist als Bänder mit undefinierten Lochmustern.

Bei einer besonders bevorzugten Ausführungsform weist das Lochmuster mindestens zwei Arten von Löchern mit verschiedenen Lochquerschnitten auf. Dies erlaubt das Aufsetzen verschieden großer Elemente auf die Grundplatte, was die Einsatzmöglichkeiten des erfindungsgemäßen Befestigungssystems erhöht, insbesondere wenn Energieleitungen unterschiedlichsten Querschnittes mittels der Grundplatte geführt und befestigt werden sollen.

Sofern gemäß den Merkmalen der Ansprüche 3 und 4 in vorteilhafter Weise bei dem erfindungsgemäßen Befestigungssystem vorgesehen ist, daß, zumindest bei einem Teil der Lochreihen, die Summe ihrer Lochquerschnitte größer ist als die des jeweils anderen Teils bzw., daß, zumindest bei einem Teil der Lochreihen, die jeweilige Lochreihe aus Löchern mindestens zweier Arten gebildet ist, lassen sich auf engstem Raum eine größtmögliche Anzahl verschiedener Befestigungsmöglichkeiten erreichen.

Aufgrund des Lochmusters in der Grundplatte sind also auf engstem Raum eine Vielzahl von durchgehenden Löchern vorhanden, in die die aufsetzbaren Elemente, zum Festlegen der Energieleitungen an der jeweiligen Grundplatte, nach Belieben einsteckbar sind. Hierdurch entsteht eine Vielzahl an Befestigungsmöglichkeiten, was eine hohe Flexibilität des Befestigungssystems mit sich bringt. Darüberhinaus ist in vorteilhafter Weise die Möglichkeit gegeben, bei einem Befestigungssystem mit den Merkmalen des Anspruches 5, die aufsetzbaren Elemente am Rand der Grundplatte festzulegen, was wiederum die Einsatzmöglichkeiten des Befestigungssystems erhöht.

Bei einer weiteren bevorzugten Ausführungsform der Erfindung ist es vorgesehen, die aufsetzbaren Elemente, insbesondere soweit es Schellen und/oder Distanzstücke sind, als Schnappteile auszubilden. Diese Schnappteile lassen sich auf besonders einfache Weise mit der Grundplatte verbinden und auch wieder lösen, so daß das erfindungsgemäße Befestigungssystem sich leicht zusammensetzen und an veränderte Gegebenheiten anpassen läßt.

Bei einer besonders bevorzugten Ausführungsform des erfindungsgemäßen Befestigungssystems haben die in die Löcher der Grundplatte eingesetzten Distanzstücke auf der einen Seite der Grundplatte einen Überstand, der größer ist als der auf derselben Seite durch den jeweiligen Fußteil gebildete Überstand. Die Distanzstücke gewährleisten hierbei mit ihrem Überstand eine gleichbleibende Distanz zwischen der Grundplatte und beispielsweise einem feststehenden Teil, wie eine Wand oder ein Boden, auf die bzw. den die Grundplatte aufsetzbar ist. Die Schellen sind dann mit der Grundplatte verbindbar, ohne daß sie in Berührung mit dem feststehenden Teil gelangen, was das Einrasten der als Schnappteile ausgebildeten Schellen be- oder gar verhindern könnte.

Vorzugsweise weisen die Distanzstücke einen Hohlzylinder auf, der innerhalb seiner beiden Endbereiche jeweils eine umlaufende Ringnut hat, die für den Eingriff mit der Grundplatte vorgesehen ist. Durch die beiden Ringnuten in einem jeden Distanzstück ist die Möglichkeit gegeben, zwei Grundplatten miteinander oder eine Grundplatte mit einem anderen auch feststehenden Teil zu verbinden, wobei vorzugsweise ein hierfür vorgesehenes Verbindungselement das jeweilige Distanzstück durchgreift.

Bei einer weiteren besonders bevorzugten Ausführungsform des Befestigungssystems ist das aufsetzbare Element aus einem Kabelkanal oder Kabelkanalsegment gebildet, in dem die Energieleitungen führbar sind, wobei vorzugsweise der Kabelkanal bzw. das Segment eine nach außen hin geschlossene Umfangsfläche und Innenaufteilungen aufweist. Mittels diesem Befestigungselement lassen sich Energieleitungen sowie ein Verbund aus solchen Leitungen vor äußeren Einflüssen geschützt auf der Grundplatte festlegen. Die Innenaufteilungen erlauben eine genaue Aufteilung von einzelnen Leitungen und Strängen innerhalb des Befestigungselementes. Ferner kann diese Innenaufteilung als Verschleißteil ausgebildet sein, so daß sich diese abnutzt und die in ihr geführten Leitungen geschont werden, sofern bei einer wechselnden Biegebeanspruchung Reibungen zwischen Innenaufteilung und Leitungsmaterial entstehen.

Besonders vorteilhaft, weil kostengünstig, ist es die Kunststoff-Grundplatte durch ein Extrusionsverfahren, vorzugsweise aus Polyamid 6 herzustellen, in die die Löcher eingestanzt werden und die aufsetzbaren Elemente mittels eines Spritzgußverfahrens herzustellen.

Zum Führen der jeweiligen Energieleitung ist eine gewisse Anzahl von aufsetzbaren Elementen mit Kopfteil in vorgebbaren Abständen voneinander entlang einer Linie anordenbar, die durch die jeweils zu führende Energieleitung gebildet ist, wobei dem jeweiligen aufsetzbaren Element zugeordnet eine dieses aufnehmende Grundplatte vorhanden ist. Auf diese Weise ist mit dem Befestigungssystem ein Ordnungssystem im Bereich der Installationstechnik verwirklicht, das es erlaubt, eine größere Anzahl von Energieleitungen über längere Strecken zu führen, ohne daß es zu einem sogenannten "Kabelsalat" kommen kann - selbst dann nicht - wenn die jeweilige Grundplatte zur Energieversorgung von verfahrbaren Maschinenelementen dient, wie beispielsweise Schlittenanordnungen bei Werkzeugmaschinen, die über entsprechend lange Verfahrwege verfügen.

Bei einer anderen bevorzugten Ausführungsform sind mehrere Grundplatten hintereinander und in vorgebbaren Abständen voneinander, vorzugsweise in aufgefalteter Form und Schleifen bildend, selbst in einem kanalförmigen Körper anordenbar. Hierdurch läßt sich in Kabelkanälen der üblichen Art unter Einhalten einer geordneten Verlegung der Energieleitungen eine höchstmögliche Verlegungsdichte erreichen.

Sofern vorzugsweise die jeweilige Grundplatte über eine zumindest teilweise einen Ausleger umgreifende Haltevorrichtung an diesem und vorzugsweise entlang demselben verfahrbar gehalten ist, lassen sich die zu verlegenden Energieleitungen vergleichbar einer Gardine mittels der Grundplatte an den eine Schiene ausbildenden Ausleger hängen. Die derart aufgehängten Energieleitungen sind dann entlang dem Ausleger frei verfahrbar.

Besonders vorteilhaft ist es, die jeweilige Grundplatte in einer bestimmten Länge in größerer Stückzahl herzustellen, was kostengünstig ist und, sofern dies erforderlich ist, die derart modulartig ausgestalteten Grundplatten zur Herstellung längerer Einheiten miteinander zu verbinden.

Mit dem erfindungsgemäßen Befestigungssystem ist insgesamt eine Art Steck-Baukasten verwirklicht, dessen Elemente wie Grundplatten, Distanzstücke, Schellen usw. sich beliebig zukaufen und in einem Steckverfahren miteinander verbinden lassen.

Im folgenden wird das erfindungsgemäße Befestigungssystem an Hand der Zeichnung näher erläutert.

Es zeigen:
Fig. 1 und 2a einen Teil der Grundplatte in Seitenansicht, teilweise im Schnitt dargestellt bzw. in Draufsicht;
Fig. 2b die ein Vieleck ausbildende Grundplatte gemäß der Fig. 2a nach Einleiten einer Biegebeanspruchung;
Fig. 2c verschiedene Verfahrmöglichkeiten der Grundplatte mit entsprechenden Biegeverläufen;
Fig. 3 einen Teil des Befestigungssystems in Seitenansicht mit teilweiser Schnittdarstellung in der rechten Figurenhälfte;
Fig. 4 und 5 die Seitenansicht auf zwei verschiedene Arten von auf der Grundplatte eingerasteten Schellen;
Fig. 6 einen Schnitt durch ein aufsetzbares Element in Form eines Kabelkanalsegmentes;
Fig. 7 und 8 das in feststehenden Kabelkanälen aufgenommene Befestigungssystem;
Fig. 9 und 10 die Stirnansicht bzw. die Seitenansicht auf das über eine Haltevorrichtung an einem Ausleger aufgehängte Befestigungssystem.

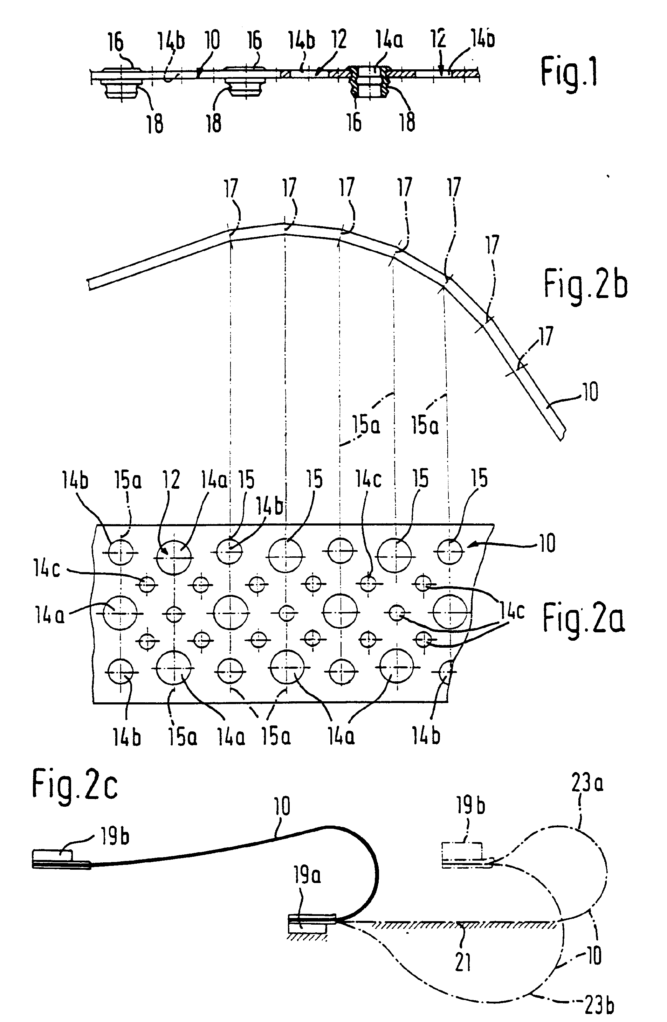

Die als Ganzes mit 10 bezeichnete Grundplatte ist aus einem biegsamen Kunststoff-Band, vorzugsweise aus Polyamid 6, hergestellt und weist eine Stärke von etwa 1 bis 2 mm (Fig. 1) auf. Das Kunststoff-Band ist bei nicht eingeleiteten Biegebeanspruchungen eben. Es läßt sich als Streifen fortlaufend durch ein Extrusionsverfahren herstellen und in beliebig vorgebbaren Längen wie benötigt abteilen.

Wie dies insbesondere die Fig. 2a zeigt, weist die Grundplatte 10 ein als Ganzes mit 12 bezeichnetes Lochmuster mit durchgehenden kreisrunden Löchern auf, die in die Grundplatte 10 mit entsprechenden Werkzeugen einstanzbar sind. Die Löcher können auch aus Bohrungen bestehen. Bei dem hier im einzelnen erläuterten Ausführungsbeispiel sind drei Gruppen von Löchern 14a, b und c mit in dieser Reihenfolge abnehmenden verschiedenen Lochquerschnitten vorhanden, hier in Form von Löchern mit unterschiedlichen Durchmessern.

Die Löcher 14a bis c bilden Lochreihen aus, die zumindest teilweise parallel zueinander verlaufen und einen vorgebbaren Abstand voneinander einnehmen. Bei einem Teil dieser mit 15 bezeichneten Lochreihen liegen deren Lochmittelpunkte auf fiktiven Linien 15a, die jeweils senkrecht sich zur Längserstreckung der Grundplatte 10 ausrichten. Die Summe der diesbezüglichen Lochquerschnitte, hier der Durchmesser, ist derart bemessen, daß das Band unter Einwirkung einer Biegebeanspruchung entlang dieser fiktiven Linien 15a der Lochreihen 15 jeweils eine definierte, mit 17 bezeichnete Knickstelle ausbildet, die in Fig. 2b dargestellt sind.

Die Einleitung dahingehender Biegebeanspruchungen kann beispielsweise bei einer Anordnung auftreten, wie sie in Fig. 2c dargestellt ist, wenn die biegsame Grundplatte 10 zwischen zwei Maschinenteilen 19a, b eingespannt ist, von denen der eine Maschinenteil 19a feststeht, wohingegen der andere Maschinenteil 19b bewegbar ist und den in Fig. 2c vorgegebenen Verfahrweg von links nach rechts in die strichpunktiert wiedergegebene Stellung zurücklegt. Dahingehende Anordnungen kennt man unter anderem von Maschinenschlitten her. Um den bewegbaren Maschinenteil 19b mit Energie in Form von hydraulischer und/oder elektrischer Energie versorgen zu können, dient die Grundplatte 10, auf der die Energieleitungen (nicht dargestellt) mittels aufsetzbarer Elemente festlegbar sind, somit als Versorgungselement.

Bewegt sich das Maschinenteil 19b in Fig. 2c gesehen nach rechts und ist ein feststehender Boden 21 vorhanden, legt sich die Grundplatte 10 auf diesem Boden 21 ab und nimmt die in Fig. 2c mit 23a bezeichnete Position ein, andernfalls - also ohne Boden 21 - die Position 23b. Wie sich hieraus ergibt, hängt also die Art der Biegebeanspruchung wesentlich von der Art der Verwendung der Grundplatte 10 ab. Je nach Stärke der zu erwartenden Biegebeanspruchungen ist der Materialquerschnitt der Grundplatte 10 an der jeweiligen vorgebbaren Knickstelle 17 zwischen 30 bis 80 %, vorzugsweise zwischen 50 und 60 %, durch die jeweiligen Lochreihen 15 geschwächt. Wie sich insbesondere aus der Fig. 2b ergibt, wird durch die Knickstellen 17 entlang des Krümmungsumfanges der Grundplatte 10 bei entsprechend eingeleiteter Biegebeanspruchung ein regelmäßiges Vieleck erzeugt, wobei die Anzahl der über die vorgebbaren Lochreihen erzeugten Ecken den Krümmungsradius der Grundplatte 10 an der Stelle der Biegung bestimmt.

Der Einfachheit halber sind in den Fig. 1 bis 2c die Energieleitungen weggelassen; ebenso weist die Fig. 2b in der Darstellung nicht das in Fig. 2a wiedergegebene Lochmuster 12 auf. Durch eine Veränderung der Anzahl der festzulegenden Energieleitungen auf einer Grundplatte 10 läßt sich ebenfalls deren Biegeverhalten entsprechend beeinflussen. Neben Kunststoff kann das Band aus Stahl bestehen, vorzugsweise in einer Dicke von 0,1 - 0,5 mm. Die für das erfindungsgemäße Befestigungssystem zum Einsatz kommenden Bänder in Form der jeweiligen Grundplatte 10 sind einerseits hinreichend steif, um den aufsetzbaren Elementen zum Führen und Halten der Energieleitungen einen festen Halt zu bieten, andererseits aber derart flexibel, daß sie allen auftretenden Biegebeanspruchungen gerecht werden. Hierzu gehören auch Biegespannungen, die die Neigung haben die Grundplatte 10 entlang ihrer Längsachse zu verwinden oder solche, die zu einem Verschwenken der Grundplatte in Ihrer Plattenebene führen.

Im übrigen läßt der aus der Fig. 2b entnehmbare Krümmungsradius der Grundplatte 10 auch dadurch bestimmen, daß man die Anzahl der Knickstellen 17 verändert. So läßt sich insbesondere bei einer hohen Anzahl an Knickstellen 17 ein Krümmungsradius erreichen, der kleiner ist als die sonst üblicherweise zu erreichenden Kurvenradien von Grundplatten mit undefinierten Lochmustern.

Die die Knickstellen bildenden Lochreihen 15 verlaufen im wesentlichen senkrecht zur Längsachse der Grundplatte 10. Es kann aber auch ein Verlauf vorgesehen sein, bei dem die Knickstellen bildenden Lochreihen einen anderen beliebigen Winkel zwischen 0 und 90° zur Längsachse der Grundplatte einnehmen. Demgemäß ergibt sich dann ein anderer Knickstellen- und damit Biegeverlauf. Je nach Einsatzgebiet des Befestigungssystemes kann dies zweckmäßig sein.

Die Löcher 14 a mit dem größten Durchmesser sind bei dem hier vorliegenden Ausführungsbeispiel für die Aufnahme der Distanzstücke 16 vorgesehen. Wie dies insbesondere die Fig. 1 in Schnittdarstellung auf der rechten Bildhälfte zeigt, besteht das jeweilige Distanzstück 16 aus einem Hohlzylinder, der innerhalb seiner beiden Endbereiche jeweils eine umlaufende Ringnut 18 aufweist. Die Breite dieser Ringnuten 18 ist derart gewählt, daß die Grundplatte 10 in diese Ringnuten 18 eingreifen oder einrasten kann, wobei der jeweilige Lochrand eines Loches 14a im wesentlichen in Anlage bringbar ist mit dem Boden einer jeden Ringnut 18. Die Distanzstücke 16 weisen jeweils einen Überstand zu der Grundplatte 10 auf.

Die Löcher 14b und 14c mit den mittleren bzw. kleinsten Durchmessern dienen der Aufnahme von verschieden großen Schellen 20, 22. Zweckmäßigerweise werden kleiner aufbauende Schellen 20 in die Löcher 14c mit dem kleinsten Lochquerschnitt oder Lochdurchmesser eingesetzt, wohingegen die größer aufbauenden Schellen 22 Aufnahme in den mittleren Löchern 14b finden. Die Größe der jeweiligen Schelle ist abhängig von den jeweils festzulegenden Energieleitungen.

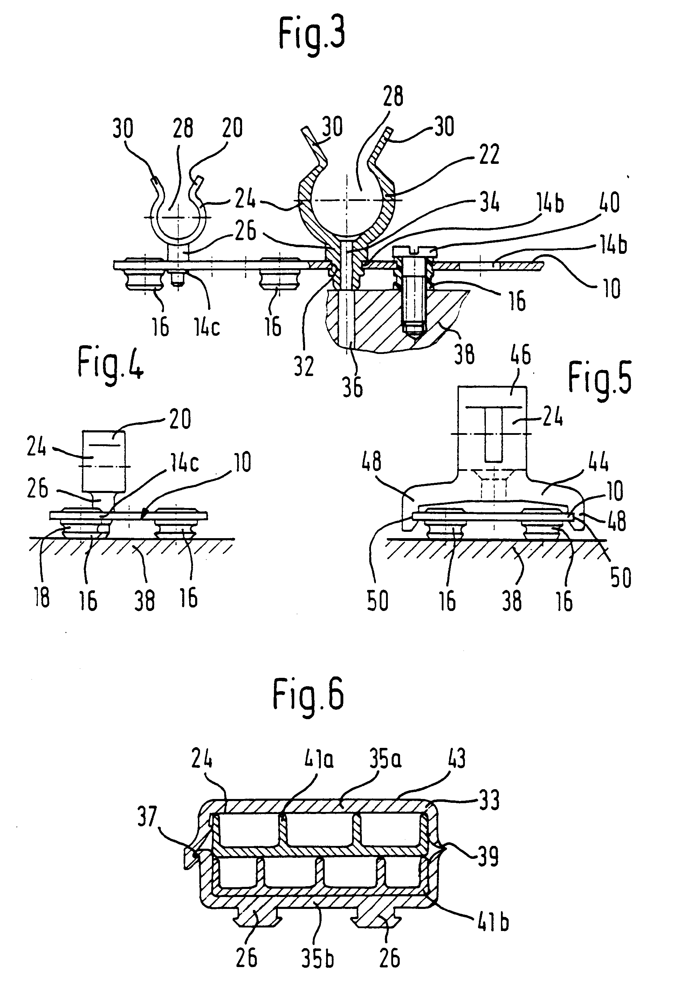

Wie dies insbesondere die Fig. 3 zeigt, weisen die Schellen 20, 22 einen klammerartigen Kopfteil 24 sowie eine erste Art von Fußteil 26 auf. Der jeweilige Kopfteil 24 ist im wesentlichen C-förmig ausgebildet und weist einen im Querschnitt im wesentlichen kreisförmigen Aufnahmeraum 28 auf, in dem die Energieleitung mit einem entsprechenden Querschnitt einlegbar ist. Als Energieleitungen kommen hier jede Art von Versorgungs-, Steuer- und Schmierstoffleitungen sowie Pneumatikschläuche in Frage. Ferner lassen sich auch stangenförmige Körper oder Seile auf der jeweiligen Grundplatte 10 befestigen und/oder führen. Zur Erleichterung des Einführens der jeweiligen Energieleitung (nicht dargestellt) in den jeweiligen Aufnahmeraum 28 sind die beiden freien Enden 30 einer jeden Schelle 20, 22, 46 (Fig. 5) zur Bildung einer Art Aufnahmetrichter nach auswärts gebogen. Diese, ebenso wie die Grundplatte 10 aus einem Kunststoff bestehenden Schellen 20, 22, 46, die in einem Spritzgußverfahren herstellbar sind, spreizen sich an ihren Enden 30 bei Eindrücken der Energieleitung in den Aufnahmeraum 28 auseinander, um sich anschliessend elastisch in Richtung ihrer ursprünglichen Lage zurückzubewegen und hierbei einen Klammerdruck auf die aufgenommene Energieleitung auszuüben, wodurch sie in ihrer Lage in der Schelle 20, 22, 46 festgehalten ist. Der Fußteil 26 der Schellen 20, 22 weist eine der Ringnut 18 der Distanzstücke 16 vergleichbare Ringnut 32 auf, die ebenso dem Durchmesser der Grundplatte 10 angepaßt und für deren Aufnahme vorgesehen ist.

Die Grundplatte 10 kann, wie dies in der Fig. 1 dargestellt ist, in vorgebbaren Abständen Distanzstücke 16 aufweisen, die gewährleisten, daß die Grundplatte 10 einen vorgebbaren Abstand von einem feststehenden Teil 38, beispielsweise einer Wand- oder Bodenfläche, einnimmt, die dem jeweiligen Überstand der Distanzstücke 16 von der Grundplatte 10 entspricht (Fig. 4, 5). Dies erlaubt, wie dies insbesondere die Fig. 4 und 5 zeigen, die Schellen 20 und 46 mit ihrer ersten Art von Fußteil 26 bzw. zweiten Art 44 in die Löcher 14c bzw. am Rand 50 der Grundplatte 10 einzurasten, ohne daß diese an einer dahingehenden Fläche 38 anstoßen könnten, soweit ihr Überstand von der Grundplatte 10 aus gemessen geringer ist als der der Distanzstücke 16. Ein dahingehender Abstand zwischen dem Überstand der Distanzstücke 16 und den Fußteilen 26 der Schellen 20, 22 braucht aber, wie dies insbesondere die Fig. 3 für die Schelle 22 zeigt, nicht vorgesehen zu sein, wenn diese in ihrem Fußteil 26 eine durchgehende Bohrung 34 aufweist, die in Anlage mit einer Bohrung 36 eines feststehenden Teiles 38 bringbar ist, mittels deren sich, beispielsweise über eine Schraubverbindung, eine feststehende Verbindung zwischen der Platte 10 mit Schellen 22 und dem feststehenden Teil 38 erreichen läßt.

Die Grundplatte 10 läßt sich mit dem feststehenden Teil 38 (Fig. 3) aber auch mittels eines Verbindungselementes 40, beispielsweise in Form einer Schraube verbinden, die das hohlzylinderartige Distanzstück 16 hierfür durchgreift. Hierbei ist es auch möglich, anstelle eines Kunststoffes für die Distanzstücke 16 ein stärker dämpfendes Material, beispielsweise Gummi, zu verwenden. Auf diese Weise ist eine erschütterungsfreie Lagerung der Grundplatte 10 mit ihren Schellen 20, 22, 46 möglich. Statt einem Verbindungselement 40 könnte, soweit sich dies als zweckmäßig erweisen sollte, auch eine Schelle 20, 22 mit ihrem Fußteil 26 in die Distanzstücke 16 unmittelbar eingesteckt werden.

In Fig. 5 ist eine andere Art der Schnappverbindung gezeigt. Dort ist der Fußteil 44 der zweiten Art einer Schelle 46 als hakenförmiges Teil mit zwei Schenkeln 48 ausgebildet, die hakenartig den Rand 50 der Grundplatte 10 an zwei einander gegenüberliegenden Stellen umgreifen. Als zusätzliches Verbindungselement der Schelle 46 mit der Grundplatte 10 kann eine Schraube vorgesehen sein (nicht dargestellt), die die zweite Art von Fußteil 44 der Schelle 46 und ein benachbartes Loch mit einem entsprechenden Lochquerschnitt in der Grundplatte 10 durchgreift. Die bisher vorgestellten Schellen 20, 22, 46 und die Distanzstücke 16 sind als Schnappteile ausgebildet, d.h. sie sind in ihren geometrischen Abmessungen derart gewählt, insbesondere größer ausgebildet, daß sie sich elastisch und lösbar in Ausnehmungen und Vorsprünge der Grundplatte 10 einrasten lassen, wo sie dann eine formschlüssige Verbindung mit der Grundplatte 10 bilden. Es wäre aber auch möglich, die aufsetzbaren Elemente über entsprechende Schraubverbindungen mit der Grundplatte 10 fest zu verbinden, was allerdings mit einem höheren Montageaufwand verbunden wäre. Ferner ist das Lochmuster 12 nicht auf die Darstellungen in den Fig. 2a, c beschränkt, sondern kann auch je nach Verwendungszweck anders aussehen. Insbesondere können die Lochquerschnitte des Musters 12 in Abhängigkeit der verwendeten Fußteile der Schellen anders beschaffen sein, beispielsweise rechteckförmig oder elliptisch sein. Auch braucht der jeweilige Lochquerschnitt nicht mit gleichbleibendem Durchmesser in der Grundplatte 10 zu verlaufen, sondern kann beispielsweise eine konische Ausbildung haben.

Die Fig. 6 zeigt im Querschnitt gesehen ein weiteres aufsetzbares Element, diesmal in Form eines sogenannten Kabelkanalsegmentes 33, innerhalb dessen die Energieleitungen (nicht dargestellt) führbar sind. Das Kabelkanalsegment 33 weist an seiner Unterseite zwei Fußteile 26 auf, wie sie für die beiden Arten an Schellen 20 und 22 Verwendung finden. Das Kabelkanalsegment 33 besteht im wesentlichen aus zwei Hälften 35a und 35b, die über eine Schnappverbindung 37 miteinander verbindbar sind und die sich mittels eines sogenannten Filmscharnieres 39 als Gelenkstelle verschwenken lassen. An die Stelle des Filmscharnieres 39 kann auch eine der Schnappverbindung 37 entsprechende Verbindung treten. Das Kabelkanalsegment 33 weist zwei Innenaufteilungen 41a und 41b auf, in deren Hohlräume die Energieleitungen bewegbar geführt sind. Die Innenaufteilungen 41a, b können als Verschleißteile ausgebildet sein, die sich unter Reibungsbeanspruchung stärker abnutzen als die zu führenden Energieleitungen. Um eine besonders schonende Führung der Energieleitungen zu erreichen, kann es vorgesehen sein, daß die Auflageflächen der Innenaufteilungen 41a, b ballig ausgebildet und die vorhandenen Ecken abgerundet sind. Diese können in Längsrichtung des Kabelkanalsegmentes 33 mit ihren Rundungen auch vorstehen, um ein Abknicken der Energieleitungen bei Biegebeanspruchungen zu vermeiden. Das Kabelkanalsegment 33 weist ferner zum Schutz der Energieleitungen eine nach außen hin geschlossene Umfangsfläche 43 auf. Zum Führen der Energieleitungen ist es vorgesehen, mehrere der in Fig. 6 im Querschnitt dargestellten Kabelkanalsegmente 33 hintereinander und in vorgebbaren Abständen voneinander entlang der Grundplatte 10 anzuordnen (nicht dargestellt). Die Kabelkanalsegmente 33 können allerdings auch zu einem geschlossenen Kabelschlauch (nicht dargestellt) zusammengesetzt werden oder kettenartig hierfür ineinandergreifen. Sofern es zweckmäßig ist, kann auch ein aus einem Stück bestehender Kabelkanal (nicht dargestellt), der eine Art Schlauch ausbildet, auf die Grundplatte 10 aufgesetzt werden. Im folgenden werden nun einige erfindungsgemäße Verwendungen des Befestigungssystems näher erläutert.

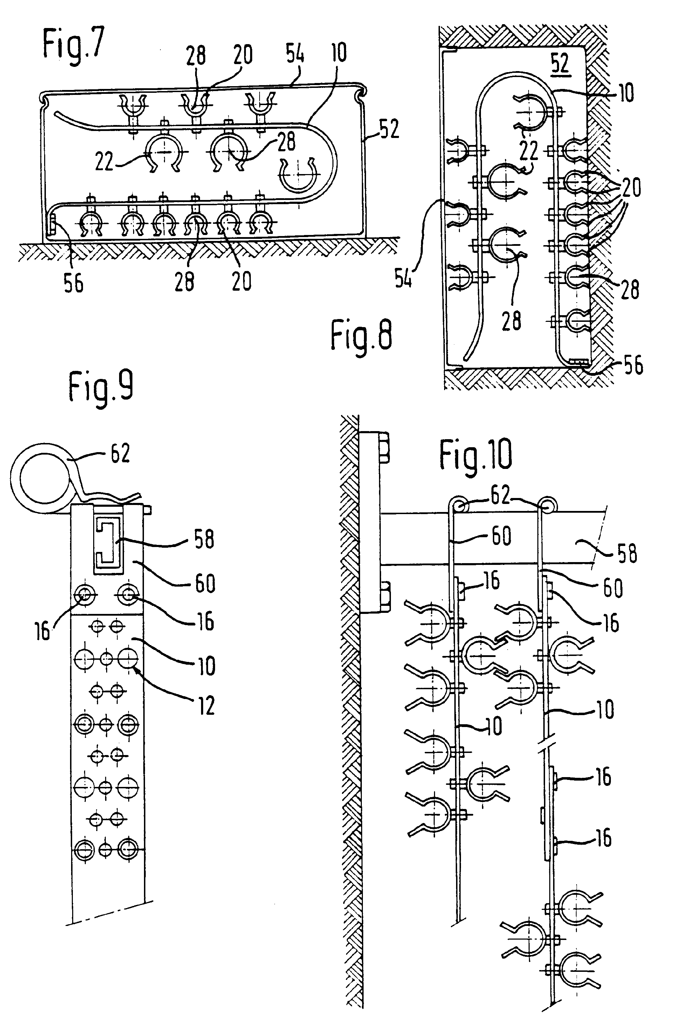

Neben dem bisher gezeigten Führen der Energieleitungen im wesentlichen parallel zur Längsachse der Grundplatte 10 sind auch andere Verwendungsweisen möglich. In den Fig. 7 und 8 ist ein Kabelkanal 52 der üblichen Art gezeigt, der einen die Öffnung des Kabelkanals 52 verschließenden Dekkel 54 hat. In Fig. 7 ist der Kabelkanal 52 als geschlossener Hohlkasten entlang eines Boden geführt, wohingegen er in Fig. 8 in einer Wand vollständig aufgenommen ist. In diesem Kabelkanal 52 ist die Grundplatte 10 in einer Schlaufe verlaufend aufgefaltet eingelegt und mit ihrem einen Ende über eine Schraube 56 mit der Wand des Kabelkanals 52 fest verbunden. Das andere Ende der Grundplatte 10 ist frei. Auf der Grundplatte 10 sind mehrere kleine und große Schellen 20 bzw. 22 eingeclippst. In diesen Schellen 20, 22, deren Aufnahmeraum 28 quer zur Längsrichtung der Grundplatte 10 verläuft, sind die Energieleitungen wie Kunststoff-Schläuche, die Luft und Flüssigkeit zuführen, sowie elektrische Kabel, Seile oder dgl. (nicht dargestellt) aufgenommen. Diese Energieleitungen bilden im wesentlichen Linien aus, entlang denen in vorgebbaren Abständen wiederum entsprechende Schellen zu deren Fixierung auf einer Grundplatte 10 innerhalb des Kabelkanals 52 vorhanden sind. Das in den Fig. 7 und 8 gezeigte Bild wiederholt sich also in vorgebbaren Abständen innerhalb des jeweiligen Kabelkanals 52. Nimmt man den Deckel 54 des jeweiligen Kabelkanals 52 ab, springt aufgrund der Eigenspannung der Grundplatte 10 diese aus dem jeweiligen Kabelkanal 52 heraus und hat die Neigung, sich zu entfalten und damit hochzustellen. Dies erleichtert aber wiederum die Zugänglichkeit der Energieleitungen, was für deren Austausch von Bedeutung ist. Mit dem erfindungsgemäßen Befestigungssystem läßt sich also bei einer dahingehenden Verwendung ein hohes Maß an Ordnung innerhalb der Kabelkanäle 52 erreichen.

Bei einer anderen erfindungsgemäßen Verwendungsweise ist ein C-Profil als Ausleger 58 (Fig. 9) im wesentlichen horizontal verlaufend (Fig. 10) an einer Wand festgeschraubt. An diesem Ausleger 58 hängen nun, wie dies insbesondere die Fig. 10 zeigt, Grundplatten 10 in einer Reihe hintereinander. Die dem Ausleger 58 jeweils unmittelbar benachbart gegenüber liegend angeordnete Grundplatte 10 ist über eine bügelartige Haltevorrichtung 60 an dem Ausleger 58 gehalten. Hierzu ist die Haltevorrichtung 60 mit ihrem einen Ende mit der Grundplatte 10 über zwei Distanzstücke 16 verbunden (Fig. 9), wobei die Wand der Haltevorrichtung 60, an diesen Stellen entsprechende Bohrungen aufweist, in die eine Ringnut 18 des jeweiligen Distanzstückes 16 eingreift und die jeweils andere Ringnut 18 für die Aufnahme der Grundplatte 10 vorgesehen ist. Am anderen Ende der Haltevorrichtung 60 ist diese derart abgekröpft, daß eine Bügelklammer 62 (Fig .9) für die Fixierung der Haltevorrichtung 60 am Ausleger 58 hindurchsteckbar ist. Diese Art der Verbindungen von Haltevorrichtungen 60 mit Ausleger 58 kann derart ausgelegt werden, daß die jeweils mit der Haltevorrichtung 60 verbundenen Grundplatten 10 entlang des Auslegers 58 verfahrbar angeordnet sind. Wie dies insbesondere die Fig.10 zeigt, ist es hierbei möglich, mehrere hintereinander angeordnete Grundplatten 10, die mittels Distanzstücken 16 verbunden sind, jeweils eine Reihe bilden zu lassen.

Das in Fig.2a dargestellte Lochband weist die nachfolgenden Abmessungen in Millimeter auf, wobei teilweise die Toleranzwerte mit angegeben sind:
Die Breite des Bandes ist 32 + 0,3.
Die Dicke des Bandes ist, sofern es aus Kunststoff PA6 besteht, 1,0 bis 2,0, sofern es aus Stahlblech besteht 0,2 bis 0,4. Der Lochdurchmesser der größten Löcher 14a ist 6,5 + 0,1,
der der mittleren Löcher 14b ist 5,0 + 0,1
und der der kleinsten Löcher 14c ist 3,5 - 0,1.
Die fiktive Linie 15a einer Lochreihe 15 an der Knickstelle 17 hat von der ihr unmittelbar benachbarten fiktiven Linie 15a einer weiteren Knickstelle 17 den Abstand 10,0.
Drei aufeinanderfolgende fiktive Lochlinien 15a an den Knickstellen 17 liegen innerhalb des Toleranzbereiches 20 + 0,1.
Die parallel zu den fiktiven Lochlinien 15a verlaufenden Linien, die durch die Mittelpunkte der Löcher 14c mit den kleinsten Lochdurchmessern gehen, sind von den ihnen unmittelbar benachbarten Linien 15a um 5,0 entfernt.
Entlang einer fiktiven Lochlinie 15a liegen
die beiden Löcher 14a mit dem größten Durchmesser 20 + 0,1 auseinander, und
die beiden Löcher 14b mit dem mittleren Durchmesser 21,4 auseinander.

Die beiden Löcher mit den kleinsten Durchmessern 14c liegen entlang einer parallel zur fiktiven Linie 15a verlaufenden Linie um 10 auseinander.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Befestigungssystem für die Befestigung von Energieleitungen mit mindestens einer Grundplatte (10), die aus einem Band gebildet ist, das biegsam ist und das ein Lochmuster (12) mit durchgehenden Löchern (14a,b,c) aufweist, die zumindest teilweise parallel zueinander verlaufende, einen vorgebbaren Abstand voneinander einnehmende Lochreihen (15) ausbilden, sowie mit auf dieser Grundplatte (10) aufsetzbaren Elementen (20,22,33,46) mit jeweils einem Kopfteil (24) für die Aufnahme mindestens einer Energieleitung und mit einer ersten Art von Fußteil (26), die für einen festsitzenden Eingriff in die Löcher (14a, b, c) vorgesehen ist, wobei das Band aus 0,5 bis 5 mm dickem Kunststoffmaterial ist oder statt Kunststoff aus Stahl besteht mit einer Dicke von 0,1 bis 0,5 mm, dadurch gekennzeichnet, daß zumindest bei einem Teil der Lochreihen (15) die Summe der Lochquerschnitte derart bemessen ist, daß das Band (10) unter Biegebeanspruchung entlang dieser Lochreihen (15) jeweils eine definierte Knickstelle (17) ausbildet.

2. Befestigungssystem nach Anspruch 1, dadurch gekennzeichnet, daß das Lochmuster (12) mindestens zwei Arten von Löchern (14a, b, c) mit verschiedenen Lochquerschnitten aufweist.

3. Befestigungssystem nach Anspruch 1 oder 2, dadurch gekennzeichnet, daß zumindest bei einem Teil der Lochreihen (15) die Summe ihrer Lochquerschnitte größer ist als die des jeweils anderen Teils.

4. Befestigungssystem nach einem der Ansprüche 1 bis 3, dadurch gekennzeichnet, daß, zumindest bei einem Teil der Lochreihen (15), die jeweilige Lochreihe (15) aus Löchern (14a, b, c) mindestens zweier Arten gebildet ist.

5. Befestigungssystem nach einem der Ansprüche 1 bis 4, dadurch gekennzeichnet, daß eine zweite Art von Fußteil (44) die Grundplatte (10) an mindestens einer Stelle ihres Randes (50), zumindest teilweise, umgreift.

6. Befestigungssystem nach einem der Ansprüche 1 bis 5, dadurch gekennzeichnet, daß die aufsetzbaren Elemente, insbesondere soweit es Schellen (20, 22, 46) und/oder Distanzstücke (16) sind, als Schnappteile ausgebildet sind.

7. Befestigungssystem nach Anspruch 6, dadurch gekennzeichnet, daß die in die Löcher (14a, b, c) der Grundplatte (10) eingesetzten Distanzstücke (16) auf der einen Seite der Grundplatte (10) einen Überstand aufweisen, der größer ist als der auf derselben Seite durch den jeweiligen Fußteil (26, 44) gebildete Überstand.

8. Befestigungssystem nach Anspruch 6 oder 7, dadurch gekennzeichnet, daß die Distanzstücke (16) einen Hohlzylinder aufweisen, der innerhalb seiner beiden Endbereiche jeweils eine umlaufende Ringnut (18) hat, die für den Eingriff mit der Grundplatte (10) vorgesehen ist.

9. Befestigungssystem nach einem der Ansprüche 6 bis 8, dadurch gekennzeichnet, daß die Grundplatte (10) mit einem feststehenden Teil (38) über mindestens ein Verbindungselement (40) verbindbar ist, das das Distanzstück (16) durchgreift und/oder das Distanzstück (16) selbst ist.

10. Befestigungssystem nach einem der Ansprüche 1 bis 9, dadurch gekennzeichnet, daß das aufsetzbare Element aus einem Kabelkanal oder Kabelkanalsegment (33) gebildet ist, in dem die Energieleitungen führbar sind, wobei vorzugsweise der Kabelkanal bzw. das Segment (33) eine nach außen hin geschlossene Umfangsfläche (43) und mindestens eine Innenaufteilung (41a, b) aufweist.

11. Verfahren zum Herstellen des Befestigungssystems nach einem der Ansprüche 1 bis 10, dadurch gekennzeichnet, daß die Kunststoff-Grundplatte (10) durch ein Extrusionsverfahren, vorzugsweise aus Polyamid 6, herstellbar ist, in die die Löcher (14a, b, c) eingestanzt werden und daß die aufsetzbaren Elemente (16, 20, 22, 33, 46) mittels eines Spritzgußverfahrens herstellbar sind.

12. Verwendung des Befestigungssystems nach einem der Ansprüche 1 bis 10, dadurch gekennzeichnet, daß zum Führen mindestens einer Energieleitung eine gewisse Anzahl von aufsetzbaren Elementen (20, 22, 33, 46) mit Kopfteil (24) in vorgebbaren Abständen voneinander entlang einer Linie anordenbar sind, die durch die jeweils zu führende Energieleitung gebildet ist, und daß dem jeweiligen aufsetzbaren Element (20, 22, 33, 46) zugeordnet eine dieses aufnehmende Grundplatte (10) vorhanden ist.

13. Verwendung nach Anspruch 12, dadurch gekennzeichnet, daß mehrere Grundplatten (10) hintereinander und in vorgebbaren Abständen voneinander, vorzugsweise in aufgefalteter Form und Schleifen bildend, selbst in einem kanalförmigen Körper (52) anordenbar sind.

14. Verwendung nach Anspruch 12, dadurch gekennzeichnet, daß die jeweilige Grundplatte (10) über eine zumindest teilweise einen Ausleger (58) umgreifende Haltevorrichtung (60) an diesem und vorzugsweise entlang demselben verfahrbar gehalten ist.

15. Verwendung nach Anspruch 14, dadurch gekennzeichnet, daß mehrere Grundplatten (10) in Reihe hintereinander angeordnet von dem Ausleger (58) gehalten sind und daß, vorzugsweise die jeweilige Reihe aus mehreren, miteinander verbundenen Grundplatten (10) gebildet ist.

## Claims

1. Fastening system for fastening power lines to at least one base plate (10), which is formed from a band, which is flexible and comprises a pattern (12) of holes with through holes (14a, b, c), which form rows of holes (15) extending at least partly parallel to each other and adopting a spacing from each other which can be predetermined, and with members (20, 22, 33, 46) able to be attached to this base plate (10), with respectively a head part (24) for receiving at least one power line and with a first type of foot part (26), which is provided for a secure engagement in the holes (14a, b, c), the band consisting of a synthetic material having a thickness of 0.5 to 5 mm or instead of synthetic material consisting of steel with a thickness of 0,1 to 0.5 mm, characterised in that at least in the case of part of the rows of holes (15), the sum of the cross-sections of the holes is dimensioned such that in the case of bending stress applied along these rows of holes (15), the band (10) respectively forms a defined kink (17).

2. Fastening system according to Claim 1, characterised in that the pattern of holes (12) comprises at least two types of hole (14a, b, c) with different cross-sections of hole.

3. Fastening system according to Claim 1 or 2, characterised in that at least in one part of the rows of holes (15), the sum of the cross-sections of the holes is greater than that of the respective other part.

4. Fastening system according to one of Claims 1 to 3, characterised in that at least in one part of the rows of holes (15), the respective row of holes (15) is formed from holes (14a, b, c) of at least two types.

5. Fastening system according to one of Claims 1 to 4, characterised in that a second type of foot part (44) engages at least partly around the base plate (10) at at least one point of its edge (50).

6. Fastening system according to one of Claims 1 to 5, characterised in that the attachable members, in particular in so far that they are clips (20, 22, 46) and/or spacer members (16), are constructed as snap action parts.

7. Fastening system according to Claim 6, characterised in that on one side of the base plate (10), the spacer members (16) inserted in the holes (14a, b, c) in the base plate (10) have a projecting length which is greater than the projecting length formed on the same side by the respective foot part (26, 44).

8. Fastening system according to Claim 6 or 7, characterised in that the spacer members (16) comprise a hollow cylinder, which within its two end regions respectively has a peripheral annular groove (18), which is provided for engagement with these base plate (10).

9. Fastening system according to one of Claims 6 to 8, characterised in that the base plate (10) can be connected to a stationary part (38) by way of at least one connecting member (40), which passes through the spacer member (16) and/or is the spacer member (16) itself.

10. Fastening system according to one of Claims 1 to 9, characterised in that the attachable member is formed from a cable conduit or cable conduit segment (33), in which the power lines can be guided, preferably the cable conduit or the segment (33) having a peripheral surface (43) closed towards the outside and at least one internal division (41a, b).

11. Method for producing the fastening system according to one of Claims 1 to 10, characterised in that the synthetic material base plate (10) can be produced by an extrusion process, preferably from Polyamide 6, in which the holes (14a, b, c) are punched and that the attachable members (16, 20, 22, 33, 46) can be produced by means of an injection moulding process.

12. Use of the fastening system according to one of Claims 1 to 10, characterised in that for guiding at least one power line, a certain number of attachable members (20, 22, 33, 46) with a head part (24) can be arranged at distances which can be predetermined, along a line, which is formed by the respective power line to be guided, and that associated with the respective attachable member (20, 22, 33, 46) is a base plate (10) receiving the latter.

13. Use according to Claim 12, characterised in that a plurality of base plates (10) can be arranged one behind the other and at distances from each other which can be predetermined, preferably in unfolded form and forming loops, even in a conduit-like member (52),

14. Use according to Claim 12, characterised in that by way of a retaining device (60) engaging at least partly around a bracket (58), the respective base plate (10) is held on the latter and is preferably able to travel along same.

15. Use according to Claim 14, characterised in that a plurality of base plates (10), arranged in a row one behind the other, are held by the bracket (58) and that, preferably the respective row is formed from a plurality of base plates (10) connected to each other.

## Revendications

1. Système de fixation pour lignes de transport d'énergie qui comprend, au moins, une plaque de base (10), formée d'une bande flexible et qui présente un arrangement ou un motif de trous (12) composé de trous traversants (14a, b, c) formant des rangées (15), au moins, partiellement parallèles espacées d'une distance prédéterminée les unes des autres, ainsi que des éléments (20, 22, 33, 46) pouvant être montées sur ladite plaque de base (10) comportant respectivement une tête (24) pour accueillir, au moins, une ligne de transport d'énergie, ainsi qu'un premier genre de pied (26) conçu pour s'engager fixement dans lesdits trous (14a, b, c), ladite bande étant en une matière plastique dont l'épaisseur est comprise entre 0,5 et 5mm, ou bien, au lieu d'être en matière plastique, est fait d'une bande d'acier de 0,1 à 0,5mm d'épaisseur, caractérisé en ce que, pour, au moins, une partie des rangées de trous (15), la somme des sections des trous est calculée de façon que lorsqu'elle est soumise à des efforts de flexion, la bande (10) présente le long desdites rangées de trous (15) des pliures ou des cassures définies (17).

2. Système de fixation selon la revendication 1, caractérisé en ce que l'arrangement ou le motif (12) des trous comprend, au moins, deux sortes de trous (14a, b, c) ayant des sections différentes.

3. Système de fixation selon la revendication 1 ou 2, caractérisé en ce que pour une partie, au moins, des rangées de trous (15), la somme des sections des trous est plus grande que celle des autres parties.

4. Système de fixation selon l'une quelconque des revendications 1 à 3, caractérisé en ce que pour une partie, au moins, des rangées de trous (15), la rangée considérée se compose d'au moins deux sortes de trous (14a, b, c).

5. Système de fixation selon l'une quelconque des revendications 1 à 4, caractérisé en ce qu'une seconde sorte de pied (44) encercle, au moins partiellement, la plaque de base (10) à, au moins, un emplacement de son bord (50).

6. Système de fixation selon l'une quelconque des revendications 1 à 5, caractérisé en ce que les éléments rapportés, notamment, lorsqu'il s'agit de colliers (20, 22, 46) et/ou d'éléments d'espacement (16), sont à encliquetage.

7. Système de fixation selon la revendication 8, caractérisé en ce que les éléments d'espacement (10) insérés dans les trous (14a, b, c) de la plaque de base (10) présentent, d'un côté de la plaque de base (10), une saillie qui est plus grande que celle produite, du même côté, par le pied (26, 44) correspondant.

8. Système de fixation selon la revendication 6 ou 7, caractérisé en ce que les éléments d'espacement (16) comportent un cylindre creux qui présente à l'intérieur de ses deux régions d'extrémité, une rainure circulaire (18) prévue pour accueillir la plaque de base (10).

9. Système de fixation selon l'une quelconque des revendications 6 à 8, caractérisé en ce que la plaque de base (10) peut être reliée à un élément fixe (10) par, au moins, un élément de liaison (40) qui traverse l'élément d'espacement (16) et/ou est l'élément d'espacement (16) lui-même.

10. Système de fixation selon l'une quelconque des revendications 1 à 9, caractérisé en ce que l'élément pouvant être monté comprend un canal de réception de câble ou de section de câble (33), dans lequel on peut faire passer des lignes de transport d'énergie, ledit canal ou segment (33) présentant une surface périphérique fermée vers l'extérieur (43) et, au moins, une division intérieure (41a, b).

11. Procédé pour produire un système de fixation tel que spécifié dans l'une quelconque des revendications 1 à 10, caractérisé en ce qu'on produit la plaque de base (10) par un procédé d'extrusion d'une matière plastique, de préférence d'un polyamide (6), dans laquelle on découpe des trous (14a, b, c) et en ce que l'on produit les éléments rapportés (16, 20, 22, 33, 46) par un procédé de moulage par injection.

12. Application du système de fixation spécifié dans l'une quelconque des revendications 1 à 10, caractérisée en ce que pour guider, au moins, une ligne de transport d'énergie, on dispose d'un certain nombre d'éléments pouvant être montés (20, 22, 33, 46) ayant une tête (24) à des intervalles prédéterminés le long d'une ligne formée par la ligne de transport d'énergie devant être guidée, et en ce qu'on associe auxdits éléments pouvant être montés (20, 22, 33, 46) une plaque de base (10) pour les recevoir.

13. Application selon la revendication 12, caractérisée en ce que plusieurs plaques de base (10) peuvent être montées l'une derrière l'autre, à des intervalles prédéterminés, de préférence, sous une forme dépliée ou en formant des boucles, dans un corps en forme de canal (52).

14. Application selon la revendication 12, caractérisée en ce que la plaque de base considérée (10) est montée, au moins, partiellement au moyen d'un dispositif de support (50) encerclant, au moins partiellement, une poutre (58), sur celle-ci et, de préférence, de manière mobile le long de cette dernière.

15. Application selon la revendication 14, caractérisée en ce que plusieurs plaques de base (10), alignées l'une derrière l'autre, son supportées par la poutre (58) et en ce que, de préférence, cette rangée est formée de plusieurs plaques de base (10) reliées ensemble.
